# EUROPEAN PATENT APPLICATION

(11) **EP 2 658 111 A1**
(43) Date of publication of application: **30.10.2013**
(21) Application number: 11851485.0
(22) Date of filing: 26.12.2011
(51) Int. Cl.: H02P 8/30, G05B 19/19, G05D 3/12

(54) **LINEAR RECIPROCATING DEVICE AND LOCATION CONTROLLING METHOD THEREOF**

(30) Priority: 24.12.2010 CN 201010621949
(71) Applicant: Peking University Founder Group Co., Ltd, Haidian District Beijing 100871 (CN); Peking University, Beijing 100871 (CN); Beijing Founder Electronics Co., Ltd., Haidian District, Beijing 100085 (CN); Peking University Founder R&D Center, Beijing 100871 (CN)
(72) Inventor: JIN, Peng, Beijing 100085 (CN); CHEN, Feng, Beijing 100085 (CN)
(74) Representative: Legg, Cyrus James Grahame
(86) International application number: PCT/CN2011/084673
(87) International publication number: WO 2012/083891

(57) **Abstract**

A linear reciprocating device and a location controlling method utilizing the device are provided. The linear reciprocating device comprises a machine base, a linear guide (2) fixedly mounted on the machine base, a linear reciprocating load (4) matching with the linear guide (2) and a motor (8) driving the load (4), and also comprises: a position detection device detecting the original position of the load (4), a displacement detection device detecting a relative displacement value of the load (4) in a positioning region, a controller coupled with the position detection device, the displacement detection device and the motor (8). The device and the location controlling method achieve higher positioning precision with lower cost.

## Description

### Field of the Invention

This invention relates to the field of automatic control, particularly, linear reciprocating devices and their control methods.

### Background of the Invention

In various industrial automation devices such as CNC machine tools, inkjet printers, digital printing device and the like, motion control of linear movement has wide-spread applications. During the process of linear reciprocating movement, positioning errors of reciprocation are induced by errors generated by mechanical structure of the transmission system and the measurement deviation of the origin detection device. Methods of relevant techniques for solving the problem include: 1) installing grating scale on the moving object, precisely detecting the position of the moving object, controller carries out decision processing according to feedback position signal of the moving object; 2) converting rotation to linear movement through transmission system, installing rotary encoder or rotary transformer on the drive shaft, the controller carries out decision processing according to feedback position signal of the moving object to achieve reciprocating positioning.

The inventor discovers that method 1) is difficult to be promoted due to high costs of grating scale; method 2) is still insufficient, because positioning precision is affected by measurement deviation of the origin detection device.

### Summary of the Invention

This invention is to provide a linear reciprocating device and its positioning control method for solving the problem of positioning precision of linear reciprocating devices.

In an embodiment of the invention, a linear reciprocating device is provided, which includes a base, a linear guide fixedly mounted on the base, a load matching the linear guide for linear reciprocating movement, and a motor driving the load, and further includes: a limit detection device for detecting an origin position of the load; a displacement detection device for detecting a relative displacement value of the load in a positioning region; a controller coupled with the limit detection device, the displacement detection device and the motor.

In an embodiment of the invention, a positioning control method for linear reciprocating device is provided, the linear reciprocating device includes a base, a linear guide fixedly mounted on the base, a load matching the linear guide for linear reciprocating movement, and a motor driving the load, the linear reciprocating device further includes: a limit detection device for detecting an origin position of the load; a displacement detection device for detecting relative displacement value of the load in a positioning region; a controller coupled with the limit detection device, the displacement detection device and the motor. The method includes: the controller controls the motion of the motor according to position detection result of the limit detection device and displacement detection result of the displacement detection device.

The linear reciprocating device and its positioning control method of the embodiments of this invention overcome high cost or low precision of current positioning control due to the use of the limit detection device and the displacement detection device for controlling the positioning, and higher positioning precision is achieved with lower cost.

### Brief Description of the Drawings

The drawing described here is used to provide further explanation to this invention, forming part of this application. The exemplary embodiment, and its description is used to explain this invention, but do not form inappropriate limitation to this invention. In the drawing:

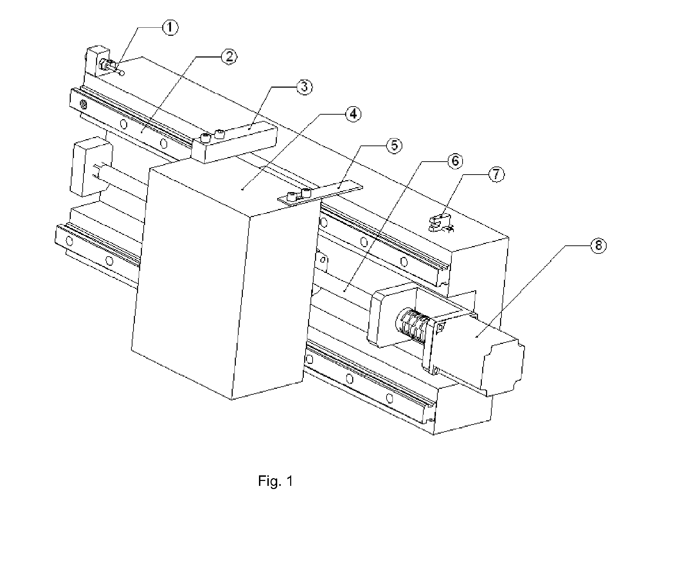

Figure 1 shows a linear reciprocating device according to an embodiment of the present invention.

### Detailed Description of the Preferred Embodiments

This invention is now described in detail by referring to the drawing in combination with the embodiments.

Figure 1 shows a linear reciprocating device according to an embodiment of the present invention, which includes a base (i.e., mounting base plate), a linear guide 2 fixedly mounted on the base, a load **4** matching the linear guide for linear reciprocating movement, and a motor **8** driving load **4.** For example, motor **8** is a stepper motor, connects with a ball screw **6** through diaphragm coupling, and drives the transmission system formed by ball screw **6,** the transmission system drives load **4** to conduct reciprocating movement along linear guide **2.** The linear reciprocating device further includes: a limit detection device for detecting an origin position of the load; a displacement detection device for detecting relative displacement value of the load in a positioning region; and a controller (not shown in the figure) coupled with the limit detection device, the displacement detection device, and motor **8.**

In one embodiment of this invention, a positioning control method of the linear reciprocating device is provided, including: the controller controls the motion of motor **8** according to position detection result of the limit detection device, and displacement detection result of the displacement detection device.

Relevant techniques using grating scale are too costly while deviation is higher using rotary encoder or rotary transformer to control the positioning. In the present embodiment, limit detection device and displacement detection device are used to control the positioning. As cost of the limit detection device and the displacement detection device is lower than that of the grating scale, problem of high cost of positioning control of current technologies is overcome. The limit detection device and the displacement detection device are more precise, therefore, the embodiment achieves higher positioning precision with lower cost.

Preferably, as shown in figure 1, the limit detection device includes: a disk stop **5** with one end being mounted on load **4,** and the other end extending towards the base; and an optoelectronic sensor **7** mounted on the base and placed on the path of motion of disk stop **5,** optoelectronic sensor **7** has a slot suitable for disk stop **5** to pass through. The slot optoelectronic sensor has a shaping circuit or amplifying circuit arranged therein to ensure the sensitivity of the slot optoelectronic sensor.

Preferably, as shown in figure **1****,** optoelectronic sensor **7** is placed at the origin position of the linear reciprocating movement of load **4.** Said origin position is the starting position of the movement of the load.

When disk stop **5** on the load of the transmission system passes through optoelectronic sensor **7,** optoelectronic sensor **7** can be triggered. Optoelectronic sensor **7** sends a signal A when it detects disk stop **5;** the controller stops the motor in real time when the controller receives signal A to prevent the load of the transmission system moving out of its effective route.

Preferably, as shown in figure 1, the displacement detection device includes: a block stop **3** with one end being mounted on load **4** and the other end extending towards the base; a differential transformer type displacement sensor **1** being mounted on the base and placed on the path of motion of block stop **3,** the slide bar of the differential transformer type displacement sensor **1** works with the collision of block stop **3.** To enhance positioning precision, differential transformer type displacement sensor with high precision can be used. Said differential transformer type displacement sensor enhances precision of the sensor and improves linearity with two internally placed and inversely connected secondary coils.

Preferably, as shown in figure 1, the differential transformer type displacement sensor **1** is placed at the positioning region of load **4.** The positioning position of said positioning region is the arrival position of the movement of the load.

When block stop **3** on the transmission system collides the slide bar of differential transformer type displacement sensor **1,** the slide bar is pushed freely and flexibly, can trigger the differential transformer type displacement sensor **1.** Differential transformer type displacement sensor **1** sends a signal B when it detects the block stop **3** colliding its slide bar, the amplitude of signal B is related to the displacement value of the slide bar (i.e., signal B is a linearly related voltage analog signal); when the controller receives signal B, the controller controls motor **8** according to the amplitude of signal B in real time to linearly decelerate until stopping at the positioning position, that is, achieving a highly precise positioning of reciprocating movement.

According to the above embodiments, when load **4** of the transmission system moves towards origin position limit detection device **7,** origin position limit detection device **7** detects disk stop **5,** sends a corresponding electrical signal (i.e., signal A), and reciprocating controller controls stepper motor **8** of the transmission system to stop immediately; when load **4** of the transmission system moves towards the positioning region from origin position limit detection device **7,** the following steps are used: a) the reciprocating controller controls stepper motor **8** of the transmission system to linearly accelerate to an operational speed, and transmission operates stably; b) then, when block stop **3** mounted to load **4** of the transmission system freely and flexibly pushes the slide bar of the displacement detection device **1,** said detector outputs a voltage analog signal (i.e., signal B), the controller controls the stepper motor **8** of the transmission system to linearly decelerate according to said voltage analog signal; d) finally, when the load of the transmission system reaches the positioning position, displacement detection device **1** outputs a voltage analog signal corresponding to the positioning position, and the reciprocating controller controls the stepper motor **8** of the transmission system to stop precisely according to said voltage analog signal. Through the above steps, a highly precise positioning process of reciprocating movement is achieved.

Preferably, the linear reciprocating devices of the above embodiments of this invention can be various industrial automation devices such as CNC machine tools, inkjet printers, digital printing device, and the like. For example, the linear reciprocating device of the above embodiments of this invention is a printing device, and load **4** is a print head.

It can be noted from the above description that the above embodiments of this invention achieves highly precise positioning of reciprocating movement under the condition of stable reciprocating movement of the transmission system. Compared with relevant techniques, this invention is simple, cost effective, convenient to achieve highly precise positioning of reciprocating movement, able to be applied widely, easy to be promoted for use, and so on.

While the invention has been described as above in terms of the preferred embodiments, this shall not be used to limit the present invention, it is apparent that modifications and adaptations of the present invention will occur to those skilled in the art. Thus, it is intended that the present invention shall cover such modifications, substitutes of the same kind and variations within the spirit and the concept of the present invention.

## Claims

1. A linear reciprocating device comprising a base, a linear guide (2) fixedly mounted on the base, a load (4) matching the linear guide for linear reciprocating movement, and a motor (8) driving said load (4), **characterized in that** said linear reciprocating device further includes:
a limit detection device for detecting an origin position of the load;
a displacement detection device for detecting a relative displacement value of the load in a positioning region; and
a controller coupled with said limit detection device, said displacement detection device and said motor (8).

2. The device according to claim 1, **characterized in that** said limit detection device includes:
a disk stop (5) with one end being mounted on said load (4) and the other end extending towards said base; and
an optoelectronic sensor (7) mounted on said base and placed on the path of motion of said disk stop (5), said optoelectronic sensor (7) has a slot suitable for said disk stop to pass through.

3. The device according to claim 2, **characterized in that** said optoelectronic sensor (7) is placed at the origin position of the linear reciprocating movement of said load (4).

4. The device according to claim 3, **characterized in that** said optoelectronic sensor (7) sends a signal A when it detects the disk stop (5); said controller is used to stop said motor (8) in real time when said controller receives said signal A.

5. The device according to claim 1, **characterized in that** said displacement detection device includes:
a block stop (3) with one end being mounted on said load (4) and the other end extending towards said base; and
a differential transformer type displacement sensor (1) being mounted on said base and placed on the path of motion of said block stop (3), the slide bar of said differential transformer type displacement sensor (1) positively works with collision of said block stop (3).

6. The device according to claim 5, **characterized in that** said differential transformer type displacement sensor (1) is placed at the positioning region of said load (4).

7. The device according to claim 1, **characterized in that** said differential transformer type displacement sensor (1) sends a signal B when it detects said block stop (3) colliding its slide bar; the amplitude of said signal B is related to displacement value of said slide bar; said controller is used to control said motor (8) according to amplitude of said signal B in real time to linearly decelerate until stopping at a positioning position when said controller receives said signal B.

8. A positioning control method for a linear reciprocating device, said linear reciprocating device includes a base, a linear guide (2) fixedly mounted on said base, a load (4) matching said linear guide for linear reciprocating movement, and a motor (8) driving said load (4), **characterized in that** said linear reciprocating device further includes: a limit detection device for detecting an origin position of said load; a displacement detection device for detecting a relative displacement value of said load in a positioning region; and a controller coupled with said limit detection device, said displacement detection device and said motor (8), the method includes:
said controller controls the motion of said motor (8) according to position detection result of said limit detection device and displacement detection result of said displacement detection device.

9. The method according to claim 8, **characterized in that** said limit detection device includes: a disk stop (5) with one end being mounted on said load (4) and the other end extending towards said base; and an optoelectronic sensor (7) being mounted on said base and placed on the path of motion of said disk stop (5), said optoelectronic sensor (7) has a slot suitable for said disk stop to pass through, said optoelectronic sensor (7) is placed at the origin position of the linear reciprocating movement of said load (4);
said optoelectronic sensor (7) sends a signal A when it detects said disk stop (5);
said controller is used to stop said motor (8) in real time when said controller receives said signal A.

10. The method according to claim 8, **characterized in that** said displacement detection device includes: a block stop (3) with one end being mounted on said load (4) and the other end extending towards said base; and a differential transformer type displacement sensor (1) being mounted on said base and placed on the path of motion of said block stop (3), the slide bar of the differential transformer type displacement sensor (1) works with the collision of said block stop (3), said differential transformer type displacement sensor (1) is placed at the positioning region of said load (4);
said differential transformer type displacement sensor (1) sends a signal B when it detects said block stop (3) colliding its slide bar, the amplitude of said signal B is related to displacement value of said slide bar;
said controller is used to control said motor (8) according to amplitude of said signal B in real time to linearly decelerate until stopping at a positioning position when said controller receives said signal B.
